# EUROPEAN PATENT APPLICATION

(11) **EP 4 349 545 A1**
(43) Date of publication of application: **10.04.2024**
(21) Application number: 23196136.8
(22) Date of filing: 08.09.2023
(51) Int. Cl.: B25J 15/04

(54) **TOOL SET**

(30) Priority: 06.10.2022 MY PI2022005560
(71) Applicant: Jabil Inc., St. Petersburg, FL 33716 (US)
(72) Inventor: Singh, Harpuneet, Dublin, CA, 94568 (US); Hu, Lei, 528511 Singapore (SG); Huang, Ying-Chieh, Jingzhou City, Hubei Province, 433318 (CN); Hsieh, Wei-Hsiu, 505022 Lugang Town, Changhua County (TW); Zheng, Xiao-Ting, Shanwei City, Guangdong Province, 516600 (CN); Chu, Chien-Cheng, 420073 Taichung City (TW); Phua, Tike Hoong, 550232 Singapore (SG); Chee, Li Yun, 760741 Singapore (SG)
(74) Representative: Gulde & Partner

(57) **Abstract**

A tool set includes a tool holder (2), a tool (3) and a tool rack (4). The tool (3) has a groove unit (32). The tool holder (2) has a latch unit (22) that engages the groove unit (32). The tool rack (4) includes a rack body (41) and a blocking member (42). When the tool holder (2) is moved away from the rack body (41) after the tool (3) is moved into the rack body (41) by the tool holder (2) and after the blocking member (42) moves to a blocking position, the tool (3) is blocked by the blocking member (42) so that the latch unit (22) is separated from the groove unit (32) and that the tool holder (2) is separated from the tool (3).

## Description

The disclosure relates to a tool, and more particularly to a tool set for a production line.

A conventional robotic arm includes an arm body, and an end-effector that is removably mounted to the arm body. When performing a specific function, a specific end-effector is adopted. However, a complicated apparatus or manual operation may be needed for separating the original end-effector from the arm body.

Therefore, an object of the disclosure is to provide a tool set that can alleviate at least one of the drawbacks of the prior art.

According to the disclosure, the tool set includes a tool holder, a tool and a tool rack. The tool holder has a latch unit. The tool is removably mounted to the tool holder and has a groove unit. The latch unit of the tool holder removably engages the groove unit of the tool for limiting relative movement between the tool and the tool holder. The tool rack includes a rack body and a blocking member. The rack body defines a retaining space permitting the tool to be moved thereinto along a path by the tool holder. The blocking member is mounted to the rack body, and is movable relative to the rack body between an unblocking position where the blocking member is separated from the path of movement of the tool, and a blocking position where the blocking member is on the path of movement of the tool. When the tool holder is moved away from the rack body after the tool is moved into the retaining space by the tool holder and after the blocking member moves to the blocking position, the tool is blocked by the blocking member so that the latch unit of the tool holder is separated from the groove unit of the tool and that the tool holder is separated from the tool.

Other features and advantages of the disclosure will become apparent in the following detailed description of the embodiment(s) with reference to the accompanying drawings. It is noted that various features may not be drawn to scale.
Figure 1 is a fragmentary perspective view illustrating an embodiment of the tool set according to the disclosure.
Figure 2 is a perspective view illustrating a tool holder and a tool of the embodiment separated from each other.
Figure 3 is a perspective view illustrating the tool holder and the tool being coupled.
Figure 4 is a perspective view illustrating a tool rack of the embodiment.
Figure 5 is a perspective view illustrating the tool rack in another state.
Figure 6 is a sectional view illustrating the tool rack.

Before the disclosure is described in greater detail, it should be noted that where considered appropriate, reference numerals or terminal portions of reference numerals have been repeated among the figures to indicate corresponding or analogous elements, which may optionally have similar characteristics.

It should be noted herein that for clarity of description, spatially relative terms such as "top," "bottom," "upper," "lower," "on," "above," "over," "downwardly," "upwardly" and the like may be used throughout the disclosure while making reference to the features as illustrated in the drawings. The features may be oriented differently (e.g., rotated 90 degrees or at other orientations) and the spatially relative terms used herein may be interpreted accordingly.

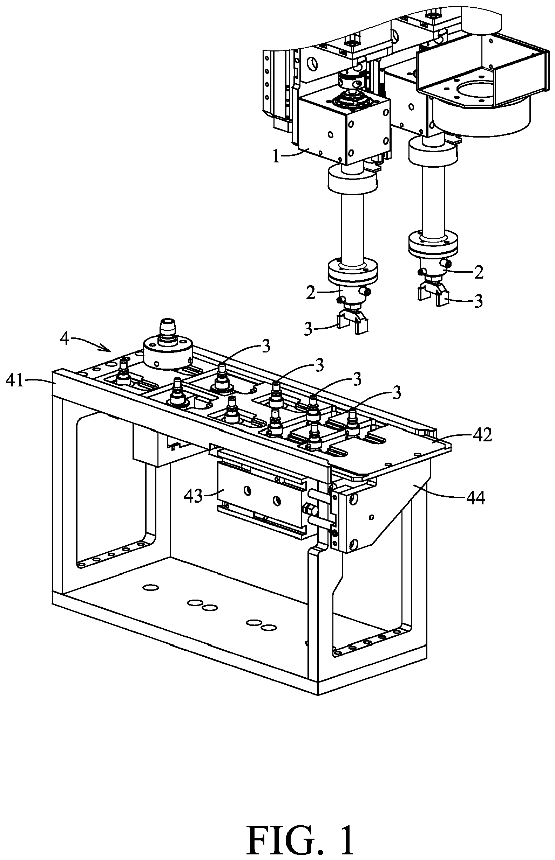

Referring to Figure 1, an embodiment of the tool set according to the disclosure includes a tool holder 2, at least one tool 3 and a tool rack 4.

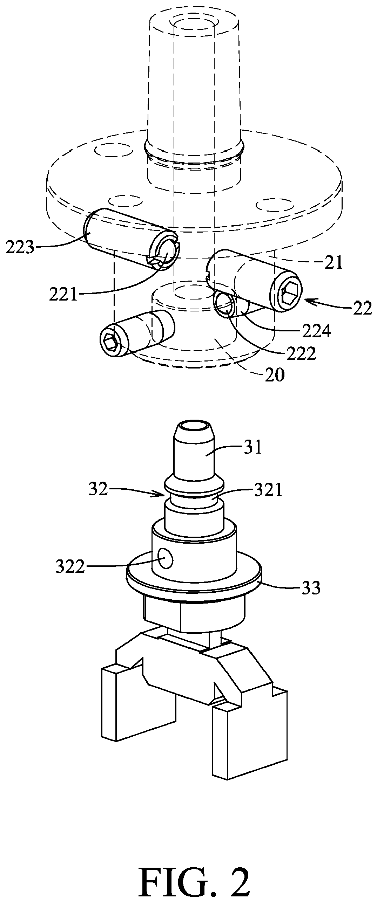

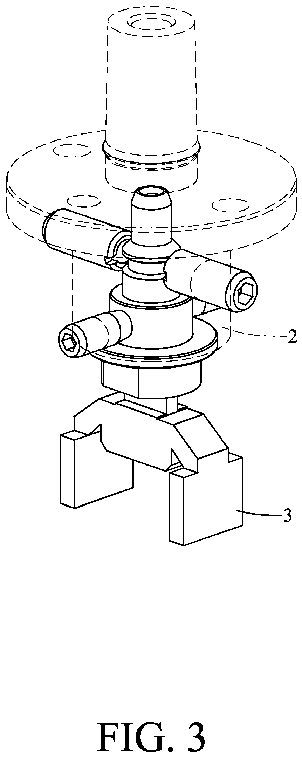

Referring further to Figures 2 and 3, the tool holder 2 is connected to a support bracket 1, and has a holder body 21 that defines a holder space 20 therein, and a latch unit 22 that is disposed on the holder body 21. The support bracket 1 may be a robotic arm or a portion of a robotic arm. In one embodiment, the holder space 20 is substantially recessed from a bottom surface of the holder body 21 such that the holder body 21 is substantially configured as a hollow cylinder.

The tool 3 is removably mounted to the tool holder 2, and has a coupling section 31 that is removably inserted into the holder space 20 of the tool holder 2, and a groove unit 32 that is formed in an outer surface of the coupling section 31. The latch unit 22 of the tool holder 2 removably engages the groove unit 32 of the tool 3 for limiting relative movement between the tool 3 and the tool holder 2. In one embodiment, the tool 3 further has a flange 33 located below the coupling section 31. The tool 3 may be a gripper, a vacuum sucker, a machining tool, or any kind of end effector.

In one embodiment, the groove unit 32 of the tool 3 includes a first groove 321. The latch unit 22 of the tool holder 2 includes a first latch member 221 that removably projects into the holder space 20 to engage the first groove 321 for preventing relative movement between the tool 3 and the tool holder 2 in a first direction (e.g., an up-down direction). In one embodiment, the first groove 321 is an annular groove.

In one embodiment, the latch unit 22 further includes a first barrel 223 that is connected to the holder body 21 and that defines an inner space in spatial communication with the holder space 20 of the tool holder 2. The first latch member 221 is disposed at an end of the first barrel 223 that is conencted to the holder body 21, is movable along the inner space of the first barrel 223, and is resiliently biased by a resilient member (not shown) to project into the holder space 20 of the tool holder 2. In one embodiment, the first latch member 221 is configured as a steel ball.

In one embodiment, the groove unit 32 of the tool 3 may further include a second groove 322. The latch unit 22 may further include a second latch member 222 that removably projects into the holder space 20 to engage the second groove 322 for preventing relative movement between the tool 3 and the tool holder 2 in a second direction transverse to the first direction. For example, the tool 3 may be prevented from rotating relative to the tool holder 2 by virtue of the engagement between the second latch member 222 and the second groove 322. The first groove 321 and the second groove 322 are spaced apart from each other in an insertion direction along which the coupling section 31 is inserted into the holder space 20. The first latch member 221 and the second latch member 222 are spaced apart from each other in the insertion direction along which the coupling section 31 is inserted into the holder space 20. In one embodiment, the second groove 322 may be a hemispherical groove.

In one embodiment, the latch unit 22 may further include a second barrel 224 that is connected to the holder body 21 and that defines an inner space in spatial communication with the holder space 20 of the tool holder 2. The second latch member 222 is disposed at an end of the second barrel 224 that is conencted to the holder body 21, is movable along the inner space of the first barrel 223, and is resiliently biased by a resilient member (not shown) to project into the holder space 20 of the tool holder 2. In one embodiment, the second latch member 222 is configured as a steel ball.

In one embodiment, the latch unit 22 may include a plurality of first latch members 221 and a plurality of second latch members 222. In one embodiment, the groove unit 32 of the tool 3 may include a plurality of second grooves 322. The number of the second grooves 322 may be equal to or greater than the number of the second latch members 222.

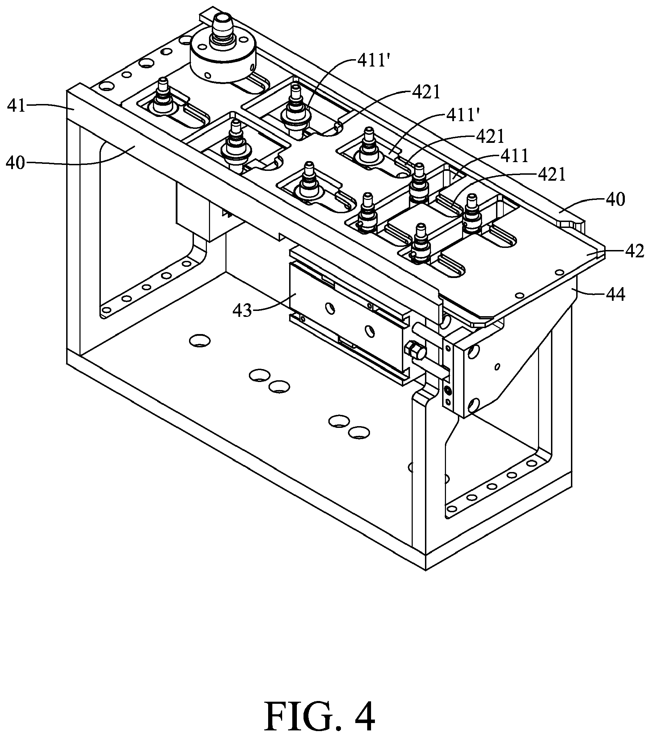

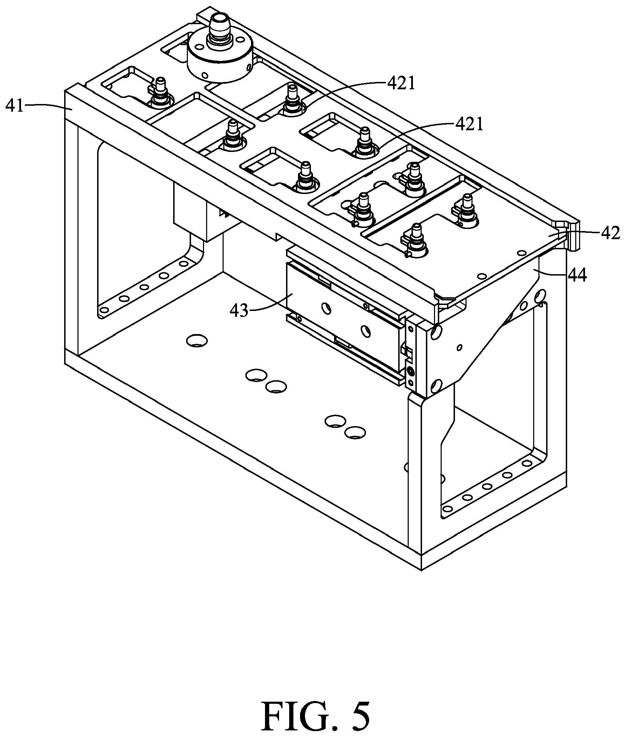

Referring to Figures 1, 4 and 5, the tool rack 4 includes a rack body 41 and a blocking member 42. The rack body 41 defines a retaining space 411 permitting the tool 3 to be moved thereinto along a path (e.g., along the up-down direction) by the tool holder 2. The blocking member 42 is mounted to the rack body 41, and is movable relative to the rack body 41 between an unblocking position (see Figure 4) where the blocking member 42 is removed from the path of movement of the tool 3, and a blocking position (see Figure 5) where the blocking member 42 is on the path of movement of the tool 3. The blocking member 42 has a blocking section 421 that is on the path of movement of the tool 3 when the blocking member 42 is at the blocking position. In one embodiment, the blocking section 421 of the blocking member 42 blocks the flange 33 of the tool 3 when the tool 3 is in the retaining space 411 and when the blocking member 42 is at the blocking position.

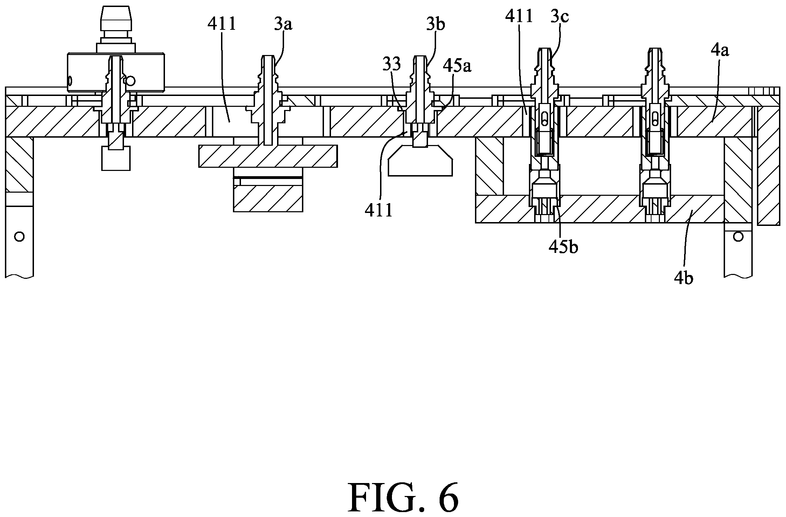

In one embodiment, the tool set includes a plurality of tool holders 2 that are mounted to the support bracket 1. In one embodiment, the tool set includes a plurality of tools 3. In one embodiment, the rack body 41 of the tool rack 4 defines a plurality of retaining spaces 411, 411' for retaining the tools 3, and the blocking member 42 has a plurality of blocking sections 421 that respectively correspond to the retaining spaces 411, 411'. Referring further to Figure 6, the tool set may include tools 3a, 3b, 3c with different configurations, and the tool rack 4 may have different positioning structures for different tools. For example, the tool rack 4 may have a first positioning structure 45a that is formed at an opening of one of the retaining spaces 411, and that is for engagement with the flange 33 of the tool 3b. The tool rack 4 may have a second positioning structure 45b that is formed at a bottom of one of the retaining spaces 411, and that is for engagement with the bottom of the tool 3c. The first positioning structure 45a and the second positioning structure 45b also serve to support the corresponding tools 3b, 3c. In one embodiment, the rack body 41 may include an upper plate 4a and a lower plate 4b that are spaced apart from each other in the first direction. At least one of the retaining spaces 411 is formed through the upper plate 4a and the lower plate 4b such that a corresponding tool 3c is supported by the upper plate 4a and the lower plate 4b. At least one of the retaining spaces 411' is formed through only the upper plate 4a such that a corresponding tool 3a, 3b is supported by the upper plate 4a. By such, the tool rack 4 is suitable for tools 3a, 3b, 3c with different configuration. In one embodiment, the rack body 41 may include two rails 40 that are disposed on the upper plate 4a and that are spaced apart from each other in a transverse direction. The blocking member 42 is located above the upper plate 4a, is located between the rails 40, and slidably engages the rails 40. The rails 40 also serve to limit the direction of movement of the blocking member 42.

In one embodiment, the tool rack 4 further includes a linear actuator 43 that is connected to the rack body 41, and a linking member 44 that interconnects the linear actuator 43 and the blocking member 42 so that the blocking member 42 is moved between the unblocking position and the blocking position by the linear actuator 43. The linear actuator 43 may be a telescopic cylinder that is operable to stretch or retract so as to move the blocking member 42 between the unblocking position and the blocking position via the linking member 44. In one embodiment, the blocking member 42 is located above the upper plate 4a, the blocking section 421 has a U-shaped opening and has a stepped structure. The blocking section 421 moves along with the movement of the blocking member 42 between the unblocking position and the blocking position to be proximate to or distal from the retaining space 411, 411', and is able to block the flange 33 of the tool 3 (see Figure 6).

To separate the tool 3 from the tool holder 2, the tool 3 is moved into the retaining space 411, 411' by the tool holder 2, and then the blocking member 42 moves to the blocking position. At this time, the coupling section 31 of the tool 3 is located in the U-shaped opeing of the blocking section 421, and the blocking section 421 blocks the flange 33 of the tool. Afterwards, the tool holder 2 is moved away from the rack body 41 by the support bracket 1. Since the tool 3 is blocked by the blocking member 42, the latch unit 22 of the tool holder 2 is separated from the groove unit 32 of the tool 3 along with the movement of the tool holder 2, and the tool holder 2 is separated from the tool 3. When the tool holder 2 is to pick the tool 3 from the tool rack 4, the blocking member 42 moves to the unblocking position, so that the tool 3 is permitted to be separated from the tool rack 4 by the tool holder 2.

In summary, by virtue of the latch unit 22 of the tool holder 2, the groove unit 32 of the tool 3 and the blocking member 42, the structure of the mechanism for separating the tool 3 from the tool holder 2 becomes relatively simple. The tool rack 4 serves to store the tool 3, and has the blocking member 42 that is able to block movement of the tool 3 relative to the tool rack 4, so as to aid separation of the tool 3 from the tool holder 2.

In the description above, for the purposes of explanation, numerous specific details have been set forth in order to provide a thorough understanding of the embodiment(s). It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects; such does not mean that every one of these features needs to be practiced with the presence of all the other features. In other words, in any described embodiment, when implementation of one or more features or specific details does not affect implementation of another one or more features or specific details, said one or more features may be singled out and practiced alone without said another one or more features or specific details. It should be further noted that one or more features or specific details from one embodiment may be practiced together with one or more features or specific details from another embodiment, where appropriate, in the practice of the disclosure.

## Claims

1. A tool set **characterized by**:
a tool holder (2) having a latch unit (22);
a tool (3) removably mounted to the tool holder (2), and having a groove unit (32), the latch unit (22) of the tool holder (2) removably engaging the groove unit (32) of the tool (3) for limiting relative movement between the tool (3) and the tool holder (2); and
a tool rack (4) including
a rack body (41) that defines a retaining space (411) permitting the tool (3) to be moved thereinto along a path by the tool holder (2), and
a blocking member (42) that is mounted to the rack body (41), and that is movable relative to the rack body (41) between an unblocking position where the blocking member (42) is separated from the path of movement of the tool (3), and a blocking position where the blocking member (42) is on the path of movement of the tool (3);
wherein, when the tool holder (2) is moved away from the rack body (41) after the tool (3) is moved into the retaining space (411) by the tool holder (2) and after the blocking member (42) moves to the blocking position, the tool (3) is blocked by the blocking member (42) so that the latch unit (22) of the tool holder (2) is separated from the groove unit (32) of the tool (3) and that the tool holder (2) is separated from the tool (3).

2. The tool set as claimed in claim 1, wherein the tool (3) has a flange (33), the blocking memebr (42) having a blocking section (421), the blocking section (421) being on the path of movement of the tool (3) when the blocking member (42) is at the blocking position.

3. The tool set as claimed in claim 2, wherein the blocking member (42) is linearly movable relative to the rack body (41).

4. The tool set as claimed in claim 3, wherein the blocking section (421) has a U-shaped opening.

5. The tool set as claimed in claim 1, wherein the tool rack 4 further includes a linear actuator (43) that is connected to the rack body (41), and a linking member (44) that interconnects the linear actuator (43) and the blocking member (42) so that the blocking member (42) is moved between the unblocking position and the blocking position by the linear actuator (43).

6. The tool set as claimed in claim 1, wherein the groove unit (32) of the tool (3) includes a first groove (321), the latch unit (22) of the tool holder (2) including a first latch member (221) that is able to engage the first groove (321) for preventing relative movement between the tool (3) and the tool holder (2) in a first direction.

7. The tool set as claimed in claim 6, wherein the tool holder (2) further has a holder body (21), the latch unit (22) further including a first barrel (223) that is connected to the holder body (21), the first latch member (221) being disposed in the first barrel (223), and resiliently engages the first groove (321).

8. The tool set as claimed in claim 6, wherein the first latch member (221) is configured as a steel ball, and the first groove (321) is configured as an annular groove.

9. The tool set as claimed in claim 6, wherein the groove unit (32) of the tool (3) further includes a second groove (322), the latch unit (22) further including a second latch member (222) that is able to engage the second groove (322) for preventing relative movement between the tool (3) and the tool holder (2) in a second direction transverse to the first direction.

10. The tool set as claimed in claim 9, wherein the tool holder (2) further has a holder body (21), the latch unit (22) further including a second barrel (224) that is connected to the holder body (21), the second latch member (222) being disposed in the second barrel (224), and resiliently engages the second groove (322).

11. The tool set as claimed in claim 9, wherein the second groove (322) is configured as a hemispherical groove.

12. The tool set as claimed in claim 1, wherein the rack body (41) includes an upper plate (4a) and a lower plate (4b) that are spaced apart from each other in the first direction, at least one of the retaining spaces (411) being formed through the upper plate (4a) and the lower plate (4b) such that a corresponding tool (3c) is supported by the upper plate (4a) and the lower plate (4b).

13. The tool set as claimed in claim 12, wherein at least one of the retaining spaces (411') is formed through only the upper plate (4a) such that a corresponding tool (3a, 3b) is supported by the upper plate (4a).

14. The tool set as claimed in claim 1, wherein the groove unit (32) of the tool (3) includes a first groove (321), the latch unit (22) of the tool holder (2) including a first latch member (221) that is able to engage the first groove (321), the groove unit (32) of the tool (3) further including a second groove (322), the latch unit (22) further including a second latch member (222) that is able to engage the second groove (322), the first groove (321) and the second groove (322) being spaced apart from each other in an insertion direction along which the coupling section (31) is inserted into the holder space (20), the first latch member (221) and the second latch member (222) being spaced apart from each other in the insertion direction.
